# EUROPEAN PATENT SPECIFICATION

(11) **EP 4 407 608 B1**
(45) Date of publication and mention of the grant of the patent: **25.03.2026**
(21) Application number: 23814348.1
(22) Date of filing: 07.12.2023
(51) Int. Cl.: G10L 19/008, G10L 19/022, G10L 21/0272, G11B 20/10, H04R 3/12, G06F 3/16, H04R 5/04

(54) **ELECTRONIC DEVICE AND METHOD FOR OUTPUTTING AUDIO DATA FROM ELECTRONIC DEVICE**
ELEKTRONISCHE VORRICHTUNG UND VERFAHREN ZUR AUSGABE VON AUDIODATEN AUS EINER ELEKTRONISCHEN VORRICHTUNG
DISPOSITIF ÉLECTRONIQUE ET PROCÉDÉ DE SORTIE DE DONNÉES AUDIO À PARTIR D'UN DISPOSITIF ÉLECTRONIQUE

(30) Priority: 08.12.2022 KR 20220170607; 05.01.2023 KR 20230001619
(43) Date of publication of application: 31.07.2024
(73) Proprietor: Samsung Electronics Co., Ltd., Suwon-si, Gyeonggi-do (KR)
(72) Inventor: KIM, Kyumin, Suwon-si, Gyeonggi-do 16677 (KR); JUNG, Chanyong, Suwon-si, Gyeonggi-do 16677 (KR); JEONG, Changdae, Suwon-si, Gyeonggi-do 16677 (KR)
(74) Representative: Gulde & Partner
(86) International application number: PCT/KR2023/020097
(87) International publication number: WO 2024/123104

(56) References cited:
- EP-A1- 4 167 580
- WO-A1-2022/002218
- WO-A1-2022/030771
- JP-A- 2008 205 822
- KR-A- 20050 095 187
- KR-A- 20110 062 912
- KR-A- 20170 062 853
- KR-A- 20220 061 537
- US-A1- 2016 255 398
- US-A1- 2023 188 919
- ANONYMOUS: "Are dedicated DSP processors worth it? - Gearspace", 14 November 2020 (2020-11-14), pages 1 - 4, XP093270754, Retrieved from the Internet <URL:https://gearspace.com/board/music-computers/1332209-dedicated-dsp-processors-worth.html> [retrieved on 20250416]

## Description

### [Technical Field]

Various embodiments of the disclosure relate to a method for outputting audio data in an electronic device.

### [Background Art]

With the development of electronic information and communication technologies, various functions are being integrated into communication devices or electronic devices, and electronic devices are being implemented to be able to perform an interworking function for interworking with other electronic devices via communication. For example, a portable electronic device (e.g., mobile terminal, tablet terminal or wearable electronic device) includes a communication function as well as a sound source playback function and may play not only the sound sources stored when manufactured but also various sound sources associated with an additional application installed and output audio sound.

WO 2022/002218 A1 discloses a conventional electronic device and a method for outputting audio data in an electronic device including a sound source separation playback function.

### [Disclosure of Invention]

### [Technical Problem]

An electronic device may output audio data using various audio output devices when playing sound source. For example, the audio output device may include a speaker of the electronic device, a first external electronic device (e.g., a wireless headset or Bluetooth speaker) connected with the electronic device wirelessly (e.g., via short-range wireless communication or Bluetooth communication), and a second external electronic device (e.g., a headset or earphone) connected wiredly (e.g., via a connector).

When a plurality of sound sources are played, the electronic device may mix the audio data corresponding to the plurality of sound sources and output the mixed audio data through the audio output device. Recent electronic devices may have a sound source separation playback function (e.g., app sound separation playback function) that may allow a plurality of sound sources to be played through different audio output devices, respectively. The electronic device may mix the audio data corresponding to the plurality of sound sources in the inactive state of the sound source separation playback function and output the mixed audio data through one audio output device and, in the active state of the sound source separation playback function, identify a plurality of audio output devices designated for the plurality of sound sources, respectively, and output the audio data through the audio output device corresponding to each sound source.

The electronic device may perform processing a first sound source and a second sound source through different processors in different paths in a state in which a first audio output device (e.g., the first external electronic device (e.g., Bluetooth speaker) is designated corresponding to the first sound source, and a second audio output device (e.g., the speaker of the electronic device or the first external electronic device) is designated corresponding to the second sound source in the active state of the sound source separation playback function. For example, the electronic device may perform the operation of converting the second sound source into wireless communication data through the processor (e.g., the first processor) different from the processor (e.g., the second processor) of the first sound source so as to output the second sound source through the second audio output device via wireless communication unlike the first sound source. Current consumption may increase while the second sound source is converted into the wireless communication data.

When the electronic device makes a change to allow the first processor to process the second sound source which used to be processed by the second processor in a case where the sound source separation playback function is changed to the inactive state while outputting the second sound source through the second audio output device in the active state of the sound source separation playback function, a sound drop may occur due to the change in the sound source processing path. Further, if the electronic device makes a change to allow the first processor to process the second sound source as processing on the first sound source is terminated while processing the first sound source through the first processor and the second sound source through the second processor in the active state of the sound source separation playback function, a sound drop may occur due to the change in the sound source processing path.

### [Solution to Problems]

According to an embodiment of the disclosure, there may be provided an electronic device and an audio data output method in the electronic device which may reduce current consumption even when the sound source separation playback function is in the active state.

According to an embodiment of the disclosure, there may be provided an electronic device and an audio data output method in the electronic device which may prevent a sound drop due to a processor switch when one sound source is supposed to be processed by one processor while processing sound sources through a plurality of processors in the active state of the sound source separation playback function.

The invention is defined by the appended set of claims. The description that follows is subjected to this limitation. Any disclosure lying outside the scope of said claims is only intended for illustrative as well as comparative purposes.

### [Advantageous Effects]

According to an embodiment of the disclosure, the electronic device may reduce current consumption when playing sound source separately in a state in which the sound source separation playback function is activated.

According to an embodiment of the disclosure, the electronic device may prevent sound drops even when the sound source separation playback function is changed from the active state to the inactive state while playing sound source separately.

### [Brief Description of Drawings]

FIG. 1 is a block diagram illustrating an electronic device in a network environment according to an embodiment;
FIG. 2 is a block diagram illustrating a configuration of an electronic device according to an embodiment;
FIG. 3 is a flowchart illustrating an audio data output operation by an electronic device according to an embodiment;
FIG. 4A is a flowchart illustrating a sound output operation when a sound source separation playback function is inactive upon requesting to play sound source by an electronic device according to an embodiment;
FIG. 4B is a flowchart illustrating a sound output operation when a sound source separation playback function is active upon requesting to play sound source by an electronic device according to an embodiment;
FIG. 5A is a view illustrating an operation of outputting audio data through an audio output module by at least one processor in a state in which a sound source separation playback function is inactive according to an embodiment;
FIG. 5B is a view illustrating an operation of transmitting audio data to a first external electronic device through a communication module by at least one processor in a state in which a sound source separation playback function is inactive according to an embodiment;
FIG. 5C is a view illustrating an operation of separating audio data and outputting it to an audio output module and a first external electronic device by at least one processor in a state in which a sound source separation playback function is active according to an embodiment; and
FIG. 5D is a view illustrating an operation of performing SRC processing in HAL when at least one processor separates audio data and outputs it to an audio output module and a first external electronic device in a state in which a sound source separation playback function is active according to an embodiment.

The same or similar reference denotations may be used to refer to the same or similar elements throughout the specification and the drawings.

### [Mode for the Invention]

The terms as used herein are provided merely to describe some embodiments thereof, but not to limit the scope of other embodiments of the present disclosure. It is to be understood that the singular forms "a," "an," and "the" include plural references unless the context clearly dictates otherwise. All terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the present disclosure.

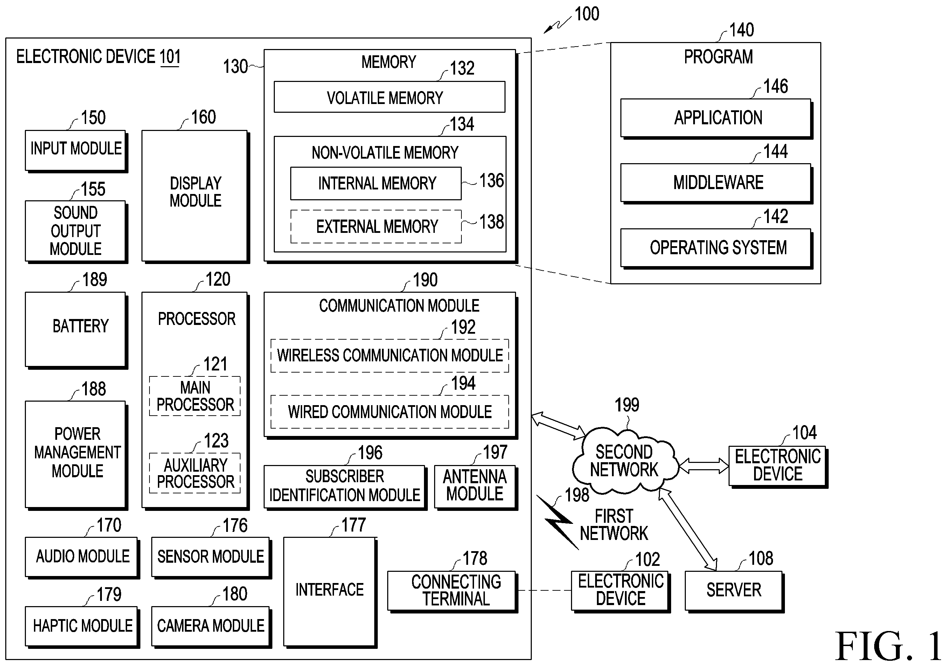

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. **In** an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a **HDMI** connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

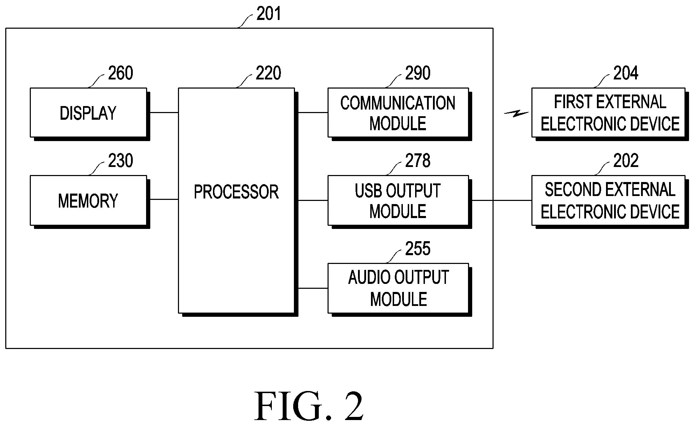

FIG. 2 is a block diagram illustrating an electronic device according to an embodiment;
Referring to FIG. 2, an electronic device 201 (e.g., the electronic device 101 of FIG. 1) according to an embodiment may include at least one processor (hereinafter, also referred to as a processor) 220, a memory 230, a display 260, an audio output module 255, a USB output module 278, and/or a communication module 290. The electronic device 201 according to an embodiment is not limited thereto and may add more components or exclude some of the above-described components. According to an embodiment, the electronic device 201 may include the whole or part of the electronic device 101 of FIG. 1.

The at least one processor 220 (e.g., the processor 120 of FIG. 1) according to an embodiment includes a first processor (e.g., a central processing unit (CPU)) and a second processor (e.g., an audio processor or an audio subsystem). The at least one processor 220 according to an embodiment may include an application processor (AP) including the first processor and the second processor, or the first processor may correspond to an AP and the second processor may be included as an auxiliary processor of the AP. Audio processors and audio subsystems are more energy efficient than a conventional central processing unit when processing audio data.

The at least one processor 220 according to an embodiment may identify at least one piece of audio information (e.g., a sound source, an audio track, or an audio stream, hereinafter referred to as a sound source) to be played (or requested to be played by an application).

The at least one processor 220 (e.g., the processor 120 of FIG. 1) according to an embodiment may identify at least one piece of audio information (e.g., a sound source, an audio track, or an audio stream, hereinafter referred to as a sound source) to be played (or requested to be played by an application). The processor 220 according to an embodiment may identify at least one application sound source (hereinafter, also referred to as a sound source) associated with each of the at least one application (or requested from each of the at least one application) as at least one application sound source to be played (or requested to be played), based on execution of the at least one application. For example, the at least one application may include a game application, a video playback application, and/or a music playback application, and any other application configured to output a sound source may be possible. When a plurality of applications are being executed, the processor 220 according to an embodiment may identify a plurality of application sound sources to be simultaneously played (or requested to be played) in association with each of the plurality of applications.

The at least one processor 220 according to an embodiment may perform a sound source separation playback function (e.g., an app sound separation playback function) capable of designating a different audio output device for each sound source. The at least one processor 220 according to an embodiment may activate or deactivate (e.g., turn on or off) the sound source separation playback function based on a user input or a designated condition. The at least one processor 220 according to an embodiment may identify whether the sound source separation playback function is in the active state or inactive state.

The at least one processor 220 according to an embodiment may identify a designated audio output device if there is no sound source separation playback function or if the sound source separation playback function is in the inactive state, based on a sound source playback request by the execution of the application. According to an embodiment, the at least one processor 220 may identify the audio output device designated by the user or previously used by the user as the audio output device corresponding to the sound source requested to be played, regardless of the sound source, if there is no sound source separation playback function or the sound source separation playback function is in the inactive state, based on the sound source playback request by the execution of the application.

The at least one processor 220 according to an embodiment may identify an audio output device corresponding to the sound source requested to be played from among the plurality of audio output devices when the separation playback function of the sound source is in the active state based on the sound source playback by the execution of the application. For example, the plurality of audio output devices may include an electronic device 201 (e.g., the audio output module 255 (e.g., a speaker)) or a USB output module 278 (e.g., a second external electronic device 202 connected through the USB output module 278), and a first external electronic device 204 capable of wireless communication (e.g., Bluetooth communication) with the electronic device 201 using the communication module 290. For example, the first external electronic device 204 may be a Bluetooth headset, a Bluetooth earphone, or a Bluetooth speaker, and the second external electronic device 202 may be an earphone, headset, or speaker connected to the electronic device 201 via USB.

According to an embodiment, the at least one processor 220 may set (or designate) a different audio output device for each sound source, and may use an audio output device set (or designated) for each sound source in the active state of the sound source separation playback function.

If the sound source separation playback function is in the active state based on the sound source playback by the execution of the application, the at least one processor 220 according to an embodiment may identify whether the audio output device designated for the sound source requested to be played is the electronic device 201 or the output module (e.g., the audio output module 255 (e.g., a speaker) or the USB output module 278 (e.g., the second external electronic device 202 connected through the USB output module 278)) or the first external electronic device 204 capable of wireless communication (e.g., Bluetooth communication) with the electronic device 201 using the communication module 290.

The at least one processor 220 according to an embodiment may output the audio sound corresponding to the first sound source through the output module (e.g., the audio output module 255 or USB output module 278) of the electronic device 201 if the electronic device 201 (or the output module of the electronic device 201) is designated as the audio output device corresponding to the first sound source, and the first external electronic device 204 is designated as the audio output device corresponding to the second sound source, and there is a playback request for the first sound source in the active state of the sound source separation playback function. The at least one processor 220 according to an embodiment may convert the audio sound corresponding to the second sound source into wireless communication data and transmit the wireless communication data corresponding to the audio sound to the first external electronic device 204 through the communication module 290 if the electronic device 201 is designated as the audio output device corresponding to the first sound source, and the first external electronic device 204 is designated as the audio output device corresponding to the second sound source, and there is a playback request for the second sound source in the active state of the sound source separation playback function.

**If** the audio output device designated for the sound source requested to be played is the electronic device 201 or the output module (e.g., the audio output module 255 (e.g., a speaker) or the USB output module 278 (e.g., the USB output module 278) of the electronic device 201), the at least one processor 220 according to an embodiment may store first audio data obtained corresponding to the sound source requested to be played in a first storage area of the memory 230. The at least one processor 220 according to an embodiment may perform first audio processing on the first audio data stored in the first storage area. For example, the first audio processing may include sample rate converting (SRC) processing and/or mixing processing. For example, the at least one processor 220 may perform SRC processing for resampling the sampling rate of the first audio data to a sampling rate corresponding to the audio output module 255 or the USB output module 278 such that the first audio data has a format supported by the audio output module 255 or the USB output module 278. For example, the at least one processor 220 may perform mixing processing for converting the frequency and the bit of the first audio data. The bit of the audio data is an audio bit depth. In digital audio using pulse-code modulation (PCM), bit depth is the number of bits of information in each sample, and it directly corresponds to the resolution of each sample.

If the audio output device designated for the sound source requested to be played is the first external electronic device 204 connectable to the electronic device 201 through wireless communication (e.g., short-range wireless communication (or Bluetooth communication)), the at least one processor 220 according to an embodiment may store the second audio data obtained corresponding to the sound source requested to be played in the second storage area of the memory 230. According to an embodiment, the at least one processor 220 (eg., a second processor 520 or an audio subsystem) may allocate a PCM buffer for bluetooth communication corresponding to the second storage area in the memory 230 and store PCM data corresponding to the second audio data in the PCM buffer for Bluetooth communication when the audio output device designated for the sound source requested to be played is the first external electronic device 204 connectable to the electronic device 201 through Bluetooth communication.

The at least one processor 220 according to an embodiment may perform second audio processing on the second audio data stored in the second storage area, may convert the second audio-processed second audio data into wireless communication data (e.g., short-range wireless communication data (or Bluetooth communication data)), and may transmit the converted wireless communication data to the first external electronic device 204 through the communication module 290. For example, the at least one processor 220 may perform SRC processing for resampling to convert the sampling rate of the second audio data to a sampling rate corresponding to the first external electronic device 204 such that the second audio data has a format supported by the first external electronic device 204. For example, the at least one processor 220 may perform mixing processing for converting the frequency and the bit of the second audio data.

The memory 230 (e.g., the memory 130 of FIG. 1) according to an embodiment may store a plurality of applications (functions or programs) and a plurality of sound sources respectively associated with the plurality of applications. According to an embodiment, the memory 230 may store a program (e.g., the program 140 of FIG. 1) used for the operation of playing at least one sound source among a plurality of sound sources and various data generated during the execution of the program 140. The memory 230 may include a first storage area for storing first audio data obtained corresponding to the sound source requested to be played when the audio output device designated for the sound source requested to be played is the electronic device 201. The memory 230 may include a second storage area for storing second audio data obtained corresponding to the sound source requested to be played when the audio output device designated for the sound source requested to be played is the first external electronic device. The memory 230 according to an embodiment may include a program area 140 and a data area (not shown). The program area 140 may store relevant program information for driving the electronic device 201, such as an operating system (OS) (e.g., the OS 142 of FIG. 1) for booting the electronic device 201. The data area (not shown) may store transmitted and/or received data and generated data according to an embodiment. The memory 250 may include at least one storage medium of a flash memory, a hard disk, a multimedia card, a micro-type memory (e.g., a secure digital (SD) or an extreme digital (xD) memory), a random access memory (RAM), or a read only memory (ROM).

The audio output module 255 (e.g., the sound output module 155 of FIG. 1) according to an embodiment may convert the first audio data into an analog audio signal and output the analog audio signal through a speaker. For example, the audio output module 255 may include a speaker.

The USB output module 278 (e.g., the connector 178 of FIG. 1) according to an embodiment may include a USB connector, and may allow the electronic device 201 and the second external electronic device 202 to communicate in a USB manner. The USB output module 278 according to an embodiment may transmit USB data corresponding to the first audio data to the second external electronic device 202.

The communication module 290 (e.g., the communication module 190 of FIG. 1) according to an embodiment may communicate with the first external electronic device 204 (e.g., the electronic device 104 of FIG. 1). For example, the communication module 290 may transmit wireless communication data corresponding to the second audio data to the first external electronic device 204. According to an embodiment, the communication module 290 may include a cellular module, a wireless-fidelity (Wi-Fi) module, a Bluetooth module, or a near field communication (NFC) module. Further, another module capable of communicating with the first external electronic device 204 may be further included.

The display 260 (e.g., the display module 160 of FIG. 1) according to an embodiment may display various types of information based on the control of the processor 220. For example, the display 260 may display a screen associated with playback of at least one sound source. According to an embodiment, the display 260 may be implemented as a touchscreen display. The display 260, when implemented together with an input module in the form of a touchscreen display, may display various information generated according to the user's touch.

According to an embodiment, the electronic device 201 is not limited to the configuration illustrated in FIG. 2 and may further include various components. According to an embodiment, the electronic device 201 may further include a microphone (not shown). The at least one processor 220 may process the sound received from the microphone into digital data and store the digital data as a sound source in the memory 220.

In an embodiment, major components of the electronic device 201 have been described above in connection with FIG. 2. According to an embodiment, however, all of the components of FIG. 2 are not essential components, and the electronic device 201 may be implemented with more or less components than those shown. Further, the connection relationship between the main components of the electronic device 201 described above with reference to FIG. 2 may be changed according to various embodiments.

An electronic device (e.g., the electronic device 101 of FIG. 1 or the electronic device 201 of FIG. 2) according to an embodiment may comprise an output module (e.g., the audio output module 255 or the USB output module 278 of FIG. 2), a communication module (e.g., the communication module 190 of FIG. 1 or the communication module 290 of FIG. 2), memory (e.g., the memory 130 of FIG. 1 or the memory 230 of FIG. 2) configured to store instrunctions, and at least one processor (e.g., the processor 120 of FIG. 1 or the processor 220 of FIG. 2). The instructions are configured to, when executed by the at least one processor, cause the electronic device to identify a request to play a sound source. The instructions are configured to, when executed by the at least one processor, cause the electronic device to identify an active state of a sound source separation playback function based on the request to play the sound source. The instructions are configured to, when executed by the at least one processor, cause the electronic device , based on a designated audio output device for the sound source is the electronic device in the active state of the sound source separation playback function, to store first audio data obtained corresponding to the sound source requested to be played in a first storage area of the memory and output the first audio data through the output module. The instructions are configured to, when executed by the at least one processor, cause the electronic device to, based on the designated audio output device for the sound source being a first external electronic device capable of wireless communication with the electronic device in the active state of the sound source separation playback function, store second audio data obtained corresponding to the sound source requested to be played in a second storage area of the memory, convert the second audio data into wireless communication data and transmit the wireless communication data to the first external electronic device.

The output module according to an embodiment may include an audio output module or a universal serial bus (USB) output module.

The instructions according to an embodiment may be further configured to, when executed by the at least one processor, cause the electronic device according to an embodiment to identify the designated audio output device as the electronic device or the first external electronic device based on the active state of the sound source separation playback function.

The instructions according to an embodiment may be further configured to, when executed by the at least one processor, cause the electronic device according to an embodiment to identify the designated audio output device as a previously used audio output device based on the inactive state of the sound source separation playback function.

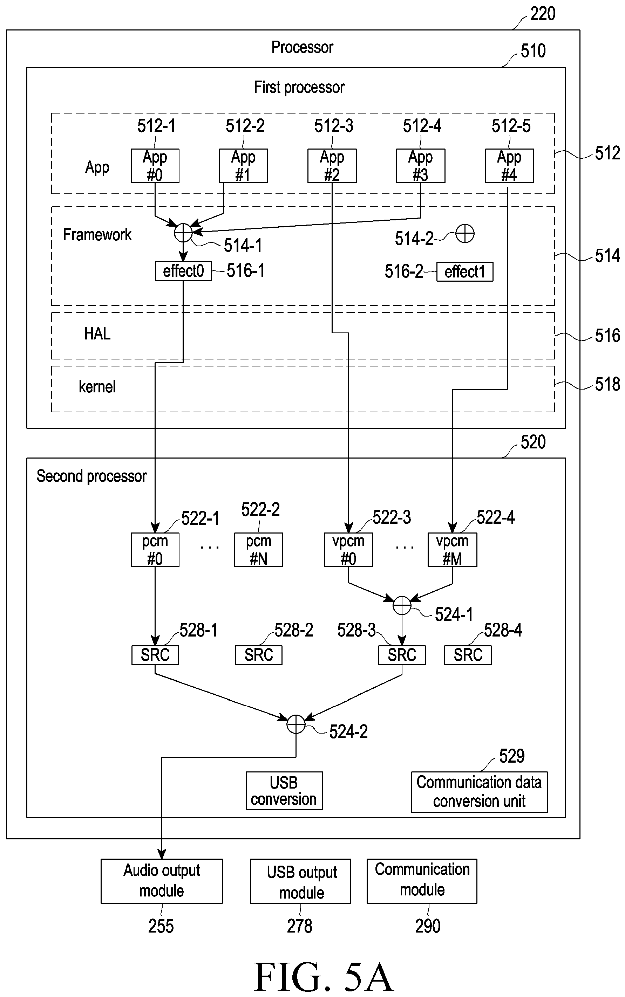

The at least one processor according to an embodiment includes a first processor (the first processor 510 of FIGS. 5A to 5D) and a second processor (the second processor 520 of FIGS. 5A to 5D), The instructions according to an embodiment are configured to, when executed by the first processor, cause the electronic device to, in the active state of the sound source separation playback function, store the first audio data obtained corresponding to the sound source requested to be played in the first storage area of the memory and store the second audio data obtained corresponding to the sound source requested to be played in the second storage area of the memory and, in an inactive state of the sound source separation playback function, store audio data obtained corresponding to the sound source requested to be played in the first storage area. The instructions according to an embodiment may be configured to, when executed by the second processor, cause the electronic device to, in the active state of the sound source separation playback function, process the first audio data stored in the first storage area and output the processed first audio data through the output module, process the second audio data stored in the second storage area to be converted into the wireless communication data, and transmit the converted wireless communication data to the first external electronic device through the communication module and, in the inactive state of the sound source separation playback function, process the audio data stored in the first storage area and output the processed audio data to the previously used audio output device. According to an embodiment, the first processor includes a center processing unit and the second processor includes an audio subsystem.

The instructions according to an embodiment may be further configured to, when executed by the second processor, cause the electronic device to perform mixing for converting a frequency and bit of the first audio data and/or sample rate converting (SRC) for converting and resampling a sampling rate of the first audio data into a sampling rate corresponding to the output module when processing the first audio data.

The instructions according to an embodiment may be further configured to, when executed by the second processor, cause the electronic device to perform mixing for converting a frequency and bit of the second audio data and/or sample rate converting (SRC) for converting and resampling a sampling rate of the second audio data into a sampling rate corresponding to the first external electronic device when processing the second audio data.

The instructions according to an embodiment may be further configured to, when executed by the first processor, cause the electronic device to, when configured to perform SRC processing on the second audio data, perform SRC processing on the second audio data and store the SRC-processed second audio data in the second storage area of the memory.

The instructions according to an embodiment may be further configured to, when executed by the first processor, cause the electronic device to identify whether SRC processing on the second audio data is required and, when the SRC processing on the second audio data is not required, refrain from performing the SRC processing on the second audio data.

The first audio data and the second audio data according to an embodiment may include PCM data. The instructions according to an embodiment may be further configured to, when executed by the second processor, cause the electronic device to allocate a PCM buffer for bluetooth communication corresponding to the second storage area and store PCM data corresponding to the second audio data in the PCM buffer for Bluetooth communication when the first external electronic device is a device connected to the electronic device through the bluetooth communication.

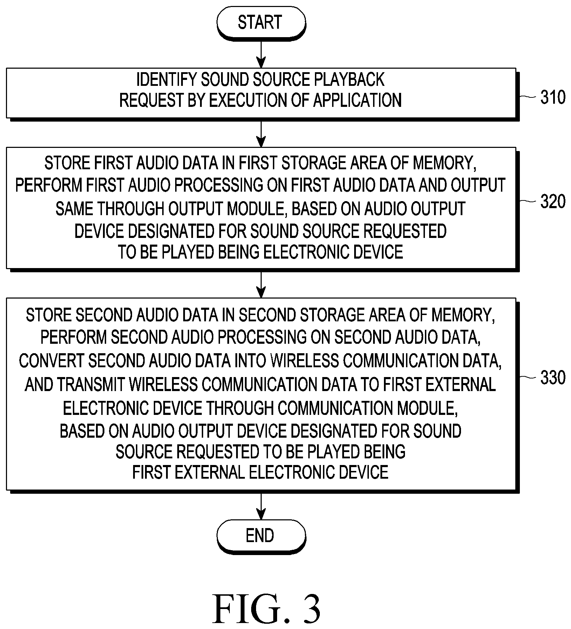

FIG. 3 is a flowchart illustrating an audio data output operation by an electronic device according to an embodiment.

Referring to FIG. 3, according to an embodiment, a processor (e.g., the processor 120 of FIG. 1 or the processor 220 of FIG. 2) of an electronic device (e.g., the electronic device 101 of FIG. 1 or the electronic device 201 of FIG. 2) may perform at least one of operations 310 to 330.

In operation 310, the processor 220 according to an embodiment may identify a sound source playback request by the execution of an application.

In operation 320, the processor 220 according to an embodiment may control to store the first audio data obtained corresponding to the sound source requested to be played in the first storage area of the memory 230, perform first audio processing on the first audio data, and output the first audio-processed first audio data through the output module (e.g., the audio output module 255 or the USB output module 278) of the electronic device 201, based on the audio output device designated for the sound source requested to be played being the electronic device 201 (or the output module (e.g., the audio output module 255 or the USB output module 278) of the electronic device 201). The processor 220 according to an embodiment may control to perform mixing processing for converting the frequency and bit of the first audio data stored in the first storage area and/or SRC processing to resample to convert the sampling rate of the first audio data into the sampling rate corresponding to the audio output module 255 or the USB output module 278 so that the first audio data has a format supported by the audio output module 255 or the USB output module 278 and output the mixing-processed and/or SRC-processed first audio data through the audio output module 255 or USB output module 278.

**In** operation 330, the processor 220 according to an embodiment may control to store the second audio data obtained corresponding to the sound source requested to be played in the second storage area of the memory 230, perform second audio processing on the second audio data, convert the second audio-processed second audio data into wireless communication data (e.g., short-range wireless communication data (or Bluetooth communication data), and transmit the converted wireless communication data to the first external electronic device 204 through the communication module 290, based on the audio output device designated for the sound source requested to be played being the first external electronic device 204 connectable to the electronic device 201 through wireless communication (e.g., short-range wireless communication (or Bluetooth communication)). The processor 220 according to an embodiment may control to perform mixing processing for converting the frequency and bit of the second audio data stored in the second storage area and/or SRC processing to resample to convert the sampling rate of the second audio data into the sampling rate corresponding to the first external electronic device 204 so that the second audio data has a format supported by the first external electronic device 204 and convert the mixing-processed and/or SRC-processed second audio data into wireless communication data.

A method for outputting audio data in an electronic device (the electronic device 101 of FIG. 1 or the electronic device 201 of FIG. 2) according to an embodiment may include identifying a request to play a sound source. The metho comprises identifying an active state of a sound source separation playback function based on the request to play the sound source. The method includes, based on a designated audio output device for the sound source being the electronic device in the active state of the sound source separation playback function, storing first audio data obtained corresponding to the sound source requested to be played in a first storage area of the memory (the memory 130 of FIG. 1 or the memory 230 of FIG. 2) and outputting the first audio data through an output module (the audio output module 255 or the USB output module 278 of FIG. 2). The method comprises, based on the designated audio output device for the sound source being a first external electronic device capable of wireless communication with the electronic device in the active state of the sound source separation playback function, storing second audio data obtained corresponding to the sound source requested to be played in a second storage area of the memory, converting the second audio data into wireless communication data and transmitting the wireless communication data to the first external electronic device through a communication module.

In the method according to an embodiment, the output module may include an audio output module or a universal serial bus (USB) output module.

The method according to an embodiment may further comprise identifying the designated audio output device as the electronic device or the first external electronic device based on the active state of the sound source separation playback function.

The method according to an embodiment may further comprise identifying the designated audio output device as a previously used audio output device based on the inactive state of the sound source separation playback function. The method according to an embodiment may comprise, in the active state of the sound source separation playback function, storing the first audio data obtained corresponding to the sound source requested to be played in the first storage area of the memory and storing the second audio data obtained corresponding to the sound source requested to be played in the second storage area of the memory and, in an inactive state of the sound source separation playback function, store audio data obtained corresponding to the sound source requested to be played in the first storage area, by a first processor (510 of FIGS. 5A to 5D). The method according to an embodiment may comprise, in the active state of the sound source separation playback function, controlling to process the first audio data stored in the first storage area and output the processed first audio data through the output module, process the second audio data stored in the second storage area to be converted into the wireless communication data, and transmit the converted wireless communication data to the first external electronic device through the communication module and, in the inactive state of the sound source separation playback function, processing the audio data stored in the first storage area and outputting the processed audio data to the previously used audio output device, by a second processor (520 of FIGS. 5A to 5D).

The method according to an embodiment may comprise performing mixing processing for converting a frequency and bit of the first audio data and/or sample rate converting (SRC) for converting and resampling a sampling rate of the first audio data into a sampling rate corresponding to the output module when processing the first audio data, by the first processor.

The method according to an embodiment may comprise performing mixing processing for converting a frequency and bit of the second audio data and/or sample rate converting (SRC) for converting and resampling a sampling rate of the second audio data into a sampling rate corresponding to the first external electronic device when processing the second audio data, by the second processor.

The method according to an embodiment may comprise, when configured to perform SRC processing on the second audio data, performing SRC processing on the second audio data and storing the SRC-processed second audio data in the second storage area of the memory, by the first processor.

The method according to an embodiment may comprise identifying whether SRC processing on the second audio data is required and, when the SRC processing on the second audio data is not required, refraining from performing the SRC processing on the second audio data, by the first processor.

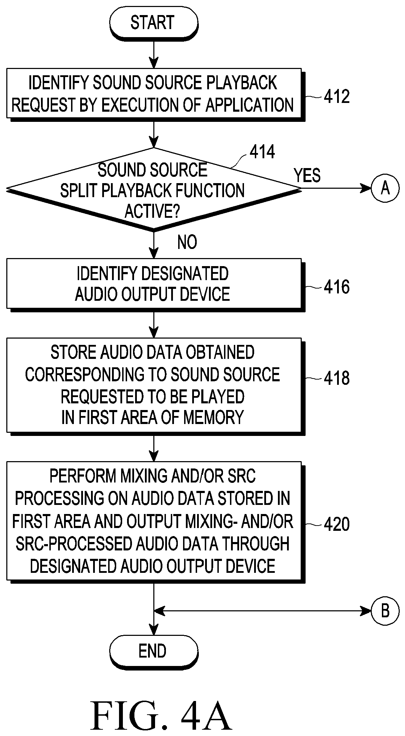

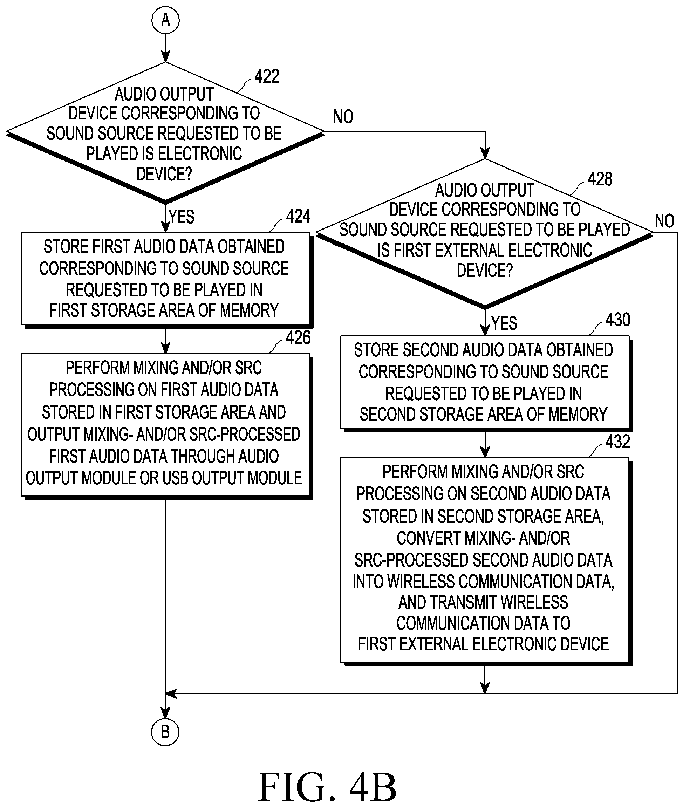

FIGS. 4A and 4B illustrate a sound output operation based on whether a sound source separation playback function is active upon a sound source playback request in an electronic device according to an embodiment. FIG. 4A is a flowchart illustrating a sound output operation when a sound source separation playback function is inactive upon requesting to play sound source by an electronic device according to an embodiment. FIG. 4B is a flowchart illustrating a sound output operation when a sound source separation playback function is active upon requesting to play sound source by an electronic device according to an embodiment.

A processor (e.g., the processor 120 of FIG. 1 or the processor 220 of FIG. 2) of an electronic device (e.g., the electronic device 101 of FIG. 1 or the electronic device 201 of FIG. 2) according to an embodiment may perform at least one of operations 412 to 432 of FIGS. 4A and 4B.

Referring to FIG. 4A, in operation 412, the processor 220 according to an embodiment may identify a sound source playback request by the execution of an application.

In operation 414, the processor 220 according to an embodiment may identify whether the sound source separation playback function is in the active state, based on the sound source playback request by the execution of the application.

In operation 416, the at least one processor 220 according to an embodiment may identify an audio output device designated (e.g., designated regardless of the sound source) if the sound source separation playback function is not in the active state (no in operation 444) (e.g., if there is no sound source separation playback function or the sound source separation playback function is in the inactive state). According to an embodiment, the designated audio output device may be an audio output device designated by a user input or previously used. According to an embodiment, the designated audio output device may be one of the electronic device 201 (or an output module (e.g., the audio output module 255 (e.g., a speaker)) or the USB output module 278 of the electronic device 201) or the first external electronic device 204 capable of wireless communication (e.g., Bluetooth communication) with the electronic device 201 using the communication module 290.

In operation 418, the at least one processor 220 according to an embodiment may store the audio data obtained corresponding to the sound source requested to be played in the first storage area of the memory 230.

In operation 420, the at least one processor 220 according to an embodiment may perform mixing and/or SRC processing on the audio data stored in the first area and may output the mixing- and/or SRC-processed audio data to a designated audio output device. The at least one processor 220 according to an embodiment may control to perform mixing processing for converting the frequency and the bit of the audio data stored in the first storage area and/or SRC processing for resampling the sampling rate of the audio data such that the audio data stored in the first storage area has a format supported by the designated audio output device, and may output the mixing- and/or SRC-processed audio data through the designated audio output device.

Referring to FIG. 4B, in operation 422, when the sound source separation playback function is in the active state (yes in operation 414), the at least one processor 220 according to an embodiment may identify whether the audio output device corresponding to the sound source requested to be played is the electronic device 201 (or the output module (e.g., the audio output module 255 (e.g., a speaker) or the USB output module 278) of the electronic device 201).

In operation 424, if the audio output device corresponding to the sound source requested to be played is the electronic device 201 (yes in operation 422), the at least one processor 220 according to an embodiment may store the first audio data obtained corresponding to the sound source requested to be played in the first storage area of the memory 230.

In operation 426, the at least one processor 220 according to an embodiment may control to perform mixing and/or SRC processing on the first audio data and output the mixing- and/or SRC-processed first audio data through the audio output module 255 or the USB output module 278 of the electronic device 201. The processor 220 according to an embodiment may control to perform mixing processing for converting the frequency and bit of the first audio data stored in the first storage area and/or SRC processing to resample to convert the sampling rate of the first audio data into the sampling rate corresponding to the audio output module 255 or the USB output module 278 so that the first audio data has a format supported by the audio output module 255 or the USB output module 278 and output the mixing-processed and/or SRC-processed first audio data through the audio output module 255 or USB output module 278.

In operation 428, if the audio output device corresponding to the sound source requested to be played is not the electronic device 201 (or the output module (e.g., the audio output module 255 (e.g., a speaker) or the USB output module 278 of the electronic device 201) (no in operation 422), the processor 220 according to an embodiment may identify whether the audio output device corresponding to the sound source requested to be played is the first external electronic device 204 connectable to the electronic device 201 through wireless communication (e.g., short-range wireless communication (or Bluetooth communication)).

In operation 430, if the audio output device corresponding to the sound source requested to be played is the first external electronic device 204 connectable to the electronic device 201 through wireless communication (yes in operation 428), the processor 220 according to an embodiment may store the second audio data obtained corresponding to the sound source requested to be played in the second storage area of the memory 230.

In operation 432, the at least one processor 220 according to an embodiment may control to perform mixing and/or SRC processing on the second audio data stored in the second storage area, convert the mixing- and/or SRC-processed second audio data into wireless communication data, and transmit the wireless communication data to the first external electronic device 204. The at least one processor 220 according to an embodiment may control to perform mixing processing for converting the frequency and bit of the second audio data stored in the second storage area and/or SRC processing to resample to convert the sampling rate of the second audio data into the sampling rate corresponding to the first external electronic device 204 so that the second audio data has a format supported by the first external electronic device 204 and convert the mixing-processed and/or SRC-processed second audio data into wireless communication data. The at least one processor 220 according to an embodiment may transmit the converted wireless communication data to the first external electronic device 204 through the communication module 290.

FIG. 5A is a view illustrating an operation of outputting audio data through an audio output module by at least one processor in a state in which a sound source separation playback function is inactive according to an embodiment.

Referring to FIG. 5A, a processor 220 (e.g., the processor 120 of FIG. 1) according to an embodiment may include a first processor 510 (e.g., a central processing unit (CPU)) and a second processor 520 (e.g., an audio processor or an audio subsystem).

The first processor 510 according to an embodiment may be a main processor (e.g., an application processor (AP)) of the electronic device 201 and may execute an OS and an application program.

The first processor 510 according to an embodiment may include an application program module (App) 512, a framework module (Framework) 514, a hardware abstraction layer (HAL) module 516, and a kernel module 528. The application program module (App) 512, the framework module (Framework) 514, the hardware abstraction layer (HAL) module 516, and the kernel module 528 may be software program modules, and at least some thereof may be preloaded on the electronic device 201 or may be downloaded from an external device.

The application program module 512 according to an embodiment may identify a sound source playback request event corresponding to each of the at least one application based on execution of the at least one application. For example, the application program module (App) 512 may identify sound source request events respectively corresponding to the applications App #0 512-1 to App #4 512-5 based on the execution of each of the plurality of applications (e.g., App #0 512-1 to App #4 512-5).

The framework module 514 according to an embodiment may include at least one mixer 514-1 and 514-2 and at least one effector effect0 514-5 and effect1 514-6. The framework module 514 according to an embodiment may perform mixing and/or effect processing on the sound sources respectively corresponding to the applications App #0 512-1 to App #4 512-5 using at least one mixer 514-1 and 514-2 and at least one effector effect0 516-1 and effect1 516-2 to obtain audio data for each of the sound sources, and transfer the obtained audio data to the HAL module 516.

The HAL module 516 according to an embodiment may identify whether the sound source separation playback function is in the active state or inactive state. The HAL module 516 according to an embodiment may store the obtained audio data in the first storage area (e.g., a first PCM data buffer) of the memory 230 and may identify an audio output device to output the audio data stored in the first storage area, in the inactive state of the sound source separation playback function. The HAL module 516 according to an embodiment may identify the audio output module 255 as an audio output device to output audio data stored in the first storage area when the audio output device designated by the user or previously used is the audio output module 255 in the inactive state of the sound source separation playback function. The HAL module 516 according to an embodiment may transfer a control signal for outputting the audio data stored in the first storage area through the audio output module 255 to the second processor 520.

The kernel module 518 according to an embodiment may include, e.g., a system resource manager (not shown) and/or a device driver (not shown). The system resource manager may perform control, allocation, or recovery of system resources. According to an embodiment of the present disclosure, the system resource manager may include a process managing unit, a memory managing unit, or a file system managing unit. The device driver may include, e.g., a Bluetooth driver, a memory driver, a USB driver, an audio driver, or an inter-process communication (IPC) driver.

The second processor 520 according to an embodiment may receive a control signal for outputting the audio data stored in the first storage area through the audio output module 255 from the first processor 510 (e.g., the HAL module 516). The second processor 520 according to an embodiment may control to obtain the audio data 522-1 to 522-4 stored in the first storage area, perform mixing processing for converting the frequency and bit of the audio data 522-1 to 522-4 stored in the first storage area and/or SRC processing for resampling the sampling rate of the audio data 522-1 to 522-4 so that the audio data 522-1 to 522-4 stored in the first storage area has a format supported by the audio output module 255, using at least one mixer 524-1 and 524-2 and/or at least one SRC module 528-1 to 528-4, and output the mixing- and/or SRC-processed audio data through the audio output module 255.

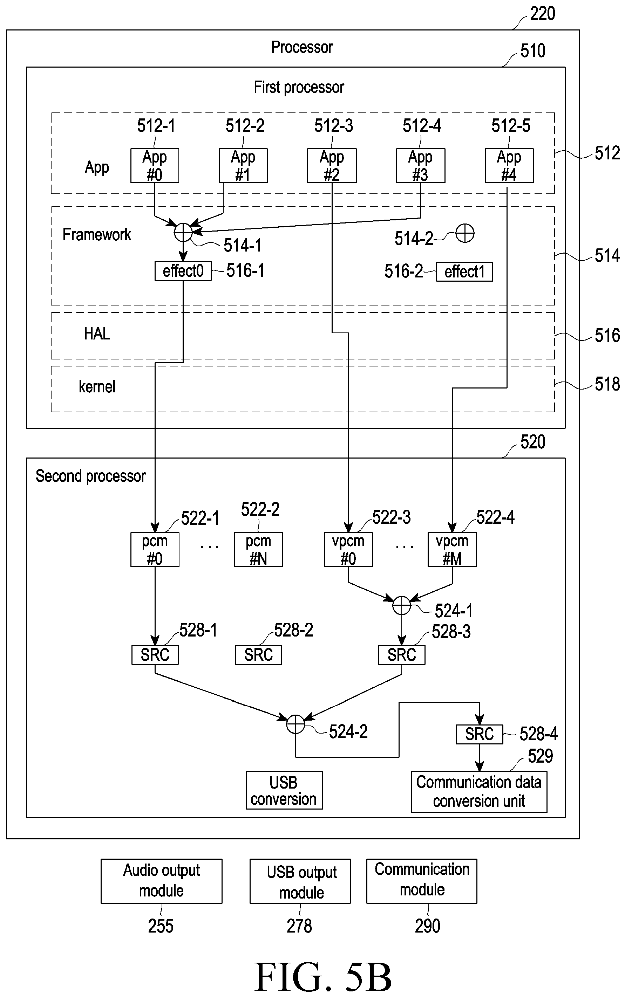

FIG. 5B is a view illustrating an operation of transmitting audio data to a first external electronic device through a communication module by at least one processor in a state in which a sound source separation playback function is inactive according to an embodiment.

Referring to FIG. 5B, the HAL module 516 of the first processor 510 according to an embodiment may store the obtained audio data in the first storage area (e.g., a first PCM data buffer) of the memory 230 and may identify an audio output device to output the audio data stored in the first storage area, in the inactive state of the sound source separation playback function. The HAL module 516 according to an embodiment may identify the first external electronic device 204 as an audio output device to output audio data stored in the first storage area when the audio output device designated by the user or previously used is the first external electronic device 204 in the inactive state of the sound source separation playback function. The HAL module 516 according to an embodiment may transfer a control signal for outputting the audio data stored in the first storage area through the first external electronic device 204 to the second processor 520.

The second processor 520 according to an embodiment may receive a control signal for outputting the audio data stored in the first storage area through the first external electronic device 204 from the first processor 510 (e.g., the HAL module 516). The second processor 520 according to an embodiment may control to obtain the audio data 522-1 to 522-4 stored in the first storage area, perform mixing processing for converting the frequency and bit of the audio data 522-1 to 522-4 stored in the first storage area and/or SRC processing for resampling the sampling rate of the audio data 522-1 to 522-4 so that the audio data 522-1 to 522-4 stored in the first storage area has a format supported by the first external electronic device 204, using at least one mixer 524-1 and 524-2 and/or at least one SRC module 528-1 to 528-4, convert the mixing- and/or SRC-processed audio data in to wireless communication data through the communication data conversion module 529 to be transmitted to the first external electronic device 204 through the communication module 290.

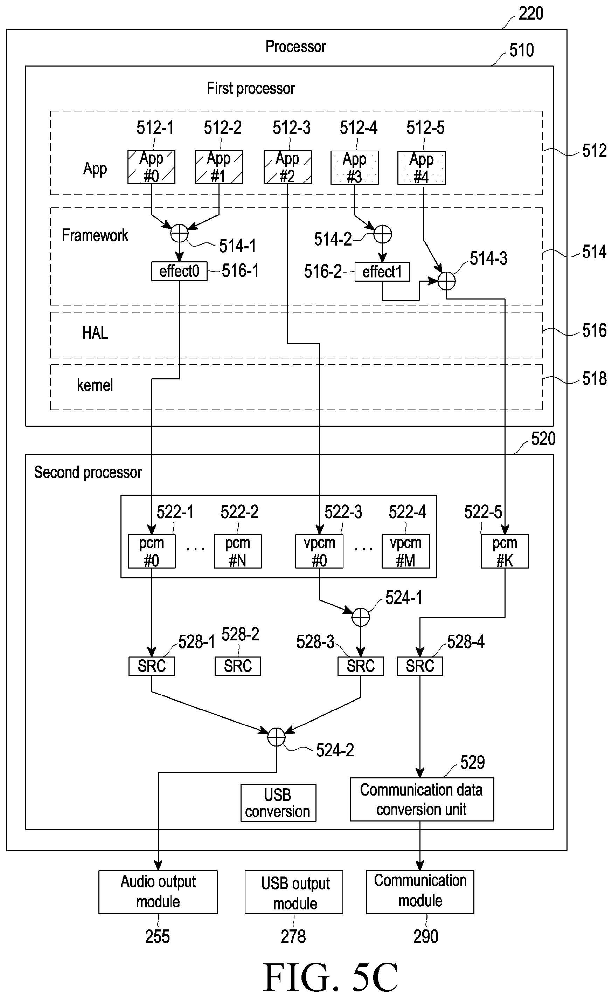

FIG. 5C is a view illustrating an operation of seperating audio data and outputting it to an audio output module and a first external electronic device by at least one processor in a state in which a sound source separation playback function is active according to an embodiment.

Referring to FIG. 5C, the HAL module 516 of the first processor 510 according to an embodiment may identify the active state of the sound source separation playback function. The HAL module 516 according to an embodiment may identify that the electronic device 201 is designated as the audio output device to output the sound sources of the applications App #0 512-1 to App #2 512-3 among the sound sources respectively corresponding to the applications App #0 512-1 to App #4 512-5, and the first external electronic device 204 is designated as the audio output device to output the sound sources of the applications App #3 512-4 and App #4 512-5, in the active state of the sound source separation playback function. The HAL module 516 according to an embodiment may store first audio data based on sound sources of the applications App #0 512-1 to App #2 512-3 among the audio data obtained by the framework module 514 in the first storage area (e.g., a first PCM data buffer) of the memory 230 and may store second audio data based on sound sources of the applications App #3 512-4 and App #4 512-5 in the second storage area (e.g., a second PCM data buffer) in the active state of the sound source separation playback function.

The HAL module 516 according to an embodiment may transmit a control signal for outputting the first audio data stored in the first storage area through the audio output module 255 and transmitting the second audio data stored in the second storage area to the first external electronic device 204 to the second processor 520.

The second processor 520 according to an embodiment may receive, from the first processor 510 (e.g., the HAL module 516), a control signal for outputting the first audio data stored in the first storage area through the audio output module 255 and transmitting, to the second processor 520, a control signal for transmitting the second audio data stored in the second storage area to the first external electronic device 204 to the second processor 520. The second processor 520 according to an embodiment may control to obtain the first audio data 522-1 to 522-4 stored in the first storage area, perform mixing processing for converting the frequency and bit of the first audio data 522-1 to 522-4 stored in the first storage area and/or SRC processing for resampling the sampling rate of the first audio data 522-1 to 522-4 so that the first audio data 522-1 to 522-4 stored in the first storage area has a format supported by the audio output module 255, using at least one mixer 524-1 and 524-2 and/or at least one SRC module 528-1 to 528-3, and output the mixing- and/or SRC-processed first audio data through the audio output module 255. The second processor 520 according to an embodiment may control to obtain the second audio data 522-5 stored in the second storage area, perform SRC processing for resampling the sampling rate of the second audio data 522-5 so that the second audio data 522-5 stored in the second storage area has a format supported by the first external electronic device 204 using at least one SRC module 528-4, and convert the SRC-processed second audio data 522-5 into wireless communication data through the communication data conversion module 529 to be transmitted to the first external electronic device 204 through the communication module 290.

The second processor 520 according to an embodiment may allocate a PCM buffer for bluetooth communication corresponding to the second storage area and process PCM data corresponding to the second audio data 522-5 using the PCM buffer for bluetooth communication.

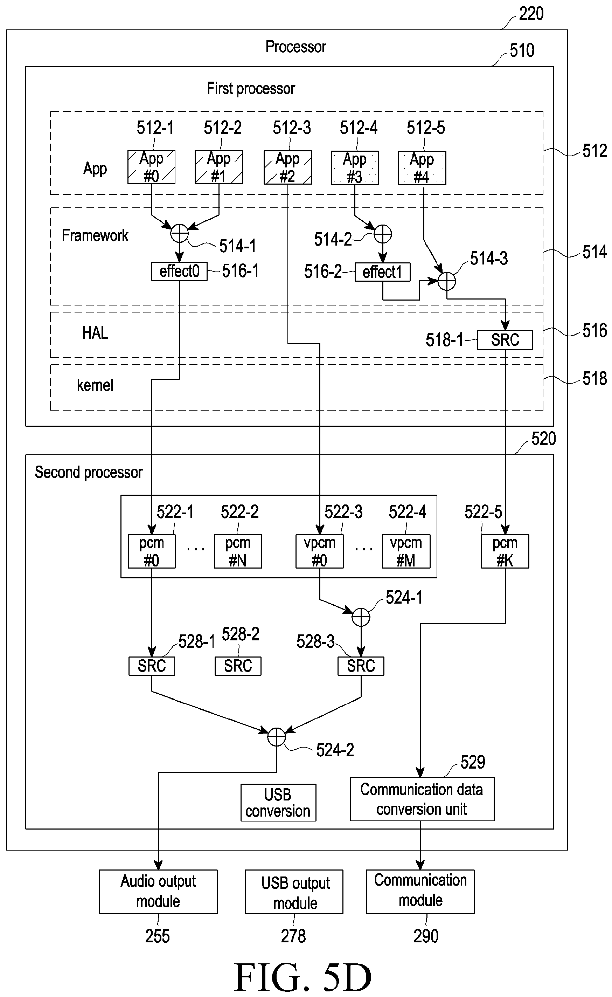

FIG. 5D is a view illustrating an operation of performing SRC processing in HAL when at least one processor separates audio data and outputs it to an audio output module and a first external electronic device in a state in which a sound source separation playback function is active according to an embodiment.

Referring to FIG. 5D, the HAL module 516 of the first processor 510 according to an embodiment may identify the active state of the sound source separation playback function. The HAL module 516 according to an embodiment may identify that the audio output module 255 is designated as the audio output device to output the sound sources of the applications App #0 512-1 to App #2 512-3 among the sound sources respectively corresponding to the applications App #0 512-1 to App #4 512-5, and the first external electronic device 204 is designated as the audio output device to output the sound sources of the applications App #3 512-4 and App #4 512-5, in the active state of the sound source separation playback function. The HAL module 516 according to an embodiment may store first audio data based on sound sources of the applications App #0 512-1 to App #2 512-3 among the audio data obtained by the framework module 514 in the first storage area (e.g., a first PCM data buffer) of the memory 230 in the active state of the sound source separation playback function. The HAL module 516 according to an embodiment may identify whether to perform SRC processing on the second audio data based on the sound sources of the applications App #3 512-4 and App #4 512-5 among the audio data obtained by the framework module 514, using the SRC module 518-1 of the HAL module 516, in the active state of the sound source separation playback function. When configured to use the SRC module 518-1 of the HAL module 516 on the second audio data based on the sound sources of the applications App #3 512-4 and App #4 512-5, the HAL module 516 may perform SRC processing on the second audio data based on the sound sources of the applications App #3 512-4 and App #4 512-5 using the SRC module 518-1 of the HAL module 516 instead of the second processor 520. The HAL module 516 according to an embodiment may omit the SRC processing operation when SRC processing on the second audio data based on the sound sources of the applications App #3 512-4 and App #4 512-5 is not required. The HAL module 516 according to an embodiment may store the SRC-processed second audio data in the second storage area (e.g., a second PCM data buffer) of the memory 230.

The HAL module 516 according to an embodiment may transmit a control signal for outputting the first audio data stored in the first storage area through the audio output module 255 and transmitting the second audio data stored in the second storage area to the first external electronic device 204 to the second processor 520.

The second processor 520 according to an embodiment may receive, from the first processor 510 (e.g., the HAL module 516), a control signal for outputting the first audio data stored in the first storage area through the audio output module 255 and transmitting, to the second processor 520, a control signal for transmitting the second audio data stored in the second storage area to the first external electronic device 204 to the second processor 520. The second processor 520 according to an embodiment may control to obtain the first audio data 522-1 to 522-4 stored in the first storage area, perform mixing processing for converting the frequency and bit of the first audio data 522-1 to 522-4 stored in the first storage area and/or SRC processing for resampling the sampling rate of the first audio data 522-1 to 522-4 so that the first audio data 522-1 to 522-4 stored in the first storage area has a format supported by the audio output module 255, using at least one mixer 514-1 and 514-2 and/or at least one SRC module 528-1 to 528-3, and output the mixing- and/or SRC-processed first audio data through the audio output module 255. The second processor 520 according to an embodiment may control to obtain the SRC-processed second audio data 522-5 stored in the second storage area and convert the SRC-processed second audio data 522-5 into wireless communication data through the communication data conversion module 529 to be transmitted to the first external electronic device 204 through the communication module 290.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 201) comprising:
an output module (255, 278);
a communication module (190, 290);
memory (130, 230) configured to store instructions; and
at least one processor (120, 220),
wherein the instructions are configured to, when executed by the at least one processor, cause the electronic device to:
identify a request, by an execution of an application, to play a sound source;
identify an active state of a sound source separation playback function based on the request to play the sound source;
based on a designated audio output device for the sound source being the electronic device in the active state of the sound source separation playback function, store first audio data including pulse-code modulation, PCM, data obtained corresponding to the sound source requested to be played in a first storage area of the memory and output the first audio data through the output module; and
based on the designated audio output device for the sound source being a first external electronic device capable of wireless communication with the electronic device in the active state of the sound source separation playback function, store second audio data including PCM data obtained corresponding to the sound source requested to be played in a second storage area of the memory, convert the second audio data into wireless communication data and transmit the wireless communication data to the first external electronic device;
**characterized in that** the at least one processor (220) includes a first processor (510) including a central processing unit and a second processor (520) including an audio subsystem,
wherein the instructions are further configured to, when executed by the first processor, cause the electronic device to, in the active state of the sound source separation playback function, store the first audio data obtained corresponding to the sound source requested to be played in the first storage area of the memory and store the second audio data obtained corresponding to the sound source requested to be played in the second storage area of the memory and, in an inactive state of the sound source separation playback function, store audio data obtained corresponding to the sound source requested to be played in the first storage area,
wherein the instructions are further configured to, when executed by the second processor, cause the electronic device to, in the active state of the sound source separation playback function, process the first audio data stored in the first storage area and output the processed first audio data through the output module, process the second audio data stored in the second storage area to be converted into the wireless communication data, and transmit the converted wireless communication data to the first external electronic device through the communication module, and in the inactive state of the sound source separation playback function, process the audio data stored in the first storage area and output the processed audio data to the previously used audio output device, and
wherein the instructions are further configured to, when executed by the second processor, cause the electronic device to allocate a PCM buffer for bluetooth communication corresponding to the second storage area and store PCM data corresponding to the second audio data in the PCM buffer for Bluetooth communication when the first external electronic device is a device connected to the electronic device through the bluetooth communication.

2. The electronic device of claim 1, wherein the output module (255, 278) includes an audio output module (255) or a universal serial bus, USB, output module (278).

3. The electronic device of claim 1 or 2,
wherein the instructions are further configured to, when executed by the at least one processor, cause the electronic device to identify the designated audio output device as the electronic device or the first external electronic device based on the active state of the sound source separation playback function.

4. The electronic device of any one of claims 1 to 3,
wherein the instructions are further configured to, when executed by the at least one processor, cause the electronic device to identify the designated audio output device as a previously used audio output device based on the inactive state of the sound source separation playback function.

5. The electronic device of any one of claims 1 to 4,
wherein the instructions are further configured to, when executed by the second processor, cause the electronic device to perform mixing processing for converting a frequency and bit of the first audio data and sample rate converting, SRC, for converting and resampling a sampling rate of the first audio data into a sampling rate corresponding to the output module when processing the first audio data.

6. The electronic device of any one of claims 1 to 5,
wherein the instructions are further configured to, when executed by the second processor, cause the electronic device to perform mixing processing for converting a frequency and bit of the second audio data and sample rate converting, SRC, for converting and resampling a sampling rate of the second audio data into a sampling rate corresponding to the first external electronic device when processing the second audio data.

7. The electronic device of any one of claims 1 to 6,
wherein the instructions are further configured to, when executed by the first processor, cause the electronic device to, when configured to perform SRC processing on the second audio data, perform SRC processing on the second audio data and store the SRC-processed second audio data in the second storage area of the memory.

8. The electronic device of any one of claims 1 to 7,
wherein the instructions are further configured to, when executed by the first processor, cause the electronic device to identify whether SRC processing on the second audio data is required and, when the SRC processing on the second audio data is not required, refrain from performing the SRC processing on the second audio data.

9. A method for outputting audio data in an electronic device (101, 201), the method comprising:
identifying (412) a request, by an execution of an application, to play a sound source;
identifying (414) an active state of a sound source separation playback function based on the request to play the sound source;
based on a designated audio output device for the sound source being the electronic device in the active state of the sound source separation playback function, storing (424) first audio data including pulse-code modulation, PCM, data obtained corresponding to the sound source requested to be played in a first storage area of memory (130, 230) and outputting (426) the first audio data through an output module (255, 278); and
based on the designated audio output device for the sound source being a first external electronic device capable of wireless communication with the electronic device in the active state of the sound source separation playback function, storing (430) second audio data including PCM data obtained corresponding to the sound source requested to be played in a second storage area of the memory, converting (432) the second audio data into wireless communication data and transmitting the wireless communication data to the first external electronic device through a communication module (190, 290);
further comprising:
in the active state of the sound source separation playback function, storing the first audio data obtained corresponding to the sound source requested to be played in the first storage area of the memory and storing the second audio data obtained corresponding to the sound source requested to be played in the second storage area of the memory by a first processor (510);
in an inactive state of the sound source separation playback function, storing audio data obtained corresponding to the sound source requested to be played in the first storage area by the first processor (510);
in the active state of the sound source separation playback function, controlling to process the first audio data stored in the first storage area and outputting the processed first audio data through the output module, processing the second audio data stored in the second storage area to be converted into the wireless communication data, and transmitting the converted wireless communication data to the first external electronic device through the communication module by a second processor (520);
in the inactive state of the sound source separation playback function, processing the audio data stored in the first storage area and output the processed audio data to the previously used audio output device by the second processor (520); and
allocating a PCM buffer for bluetooth communication corresponding to the second storage area and storing PCM data corresponding to the second audio data in the PCM buffer for Bluetooth communication when the first external electronic device is a device connected to the electronic device through the bluetooth communication by the second processor (520).

10. The method of claim 9, wherein the output module includes an audio output module or a universal serial bus, USB, output module.

11. The method of claim 9 or 10, further comprising identifying the designated audio output device as the electronic device or the first external electronic device based on the active state of the sound source separation playback function.

12. The method of any one of claims 9 to 11, further comprising identifying the designated audio output device as a previously used audio output device based on the inactive state of the sound source separation playback function.

13. A non-volatile storage medium storing instructions, wherein the instructions are configured, when executed by an electronic device, to cause the electronic device to perform at least one operation, the at least one operation comprising:
identifying a request, by an execution of an application, to play a sound source;
identifying an active state of a sound source separation playback function based on the request to play the sound source;
based on a designated audio output device for the sound source being the electronic device in the active state of the sound source separation playback function, storing first audio data including pulse-code modulation, PCM, data obtained corresponding to the sound source requested to be played in a first storage area of memory (130, 230) and outputting the first audio data through an output module (255, 278); and
based on the designated audio output device for the sound source being a first external electronic device capable of wireless communication with the electronic device in the active state of the sound source separation playback function, storing second audio data including PCM data obtained corresponding to the sound source requested to be played in a second storage area of the memory, converting the second audio data into wireless communication data and transmitting the wireless communication data to the first external electronic device through a communication module (190, 290);
further comprising:
in the active state of the sound source separation playback function, storing the first audio data obtained corresponding to the sound source requested to be played in the first storage area of the memory and storing the second audio data obtained corresponding to the sound source requested to be played in the second storage area of the memory by a first processor (510);
in an inactive state of the sound source separation playback function, store audio data obtained corresponding to the sound source requested to be played in the first storage area by the first processor (510);
in the active state of the sound source separation playback function, controlling to process the first audio data stored in the first storage area and outputting the processed first audio data through the output module, processing the second audio data stored in the second storage area to be converted into the wireless communication data, and transmitting the converted wireless communication data to the first external electronic device through the communication module by a second processor (520);
in the inactive state of the sound source separation playback function, processing the audio data stored in the first storage area and output the processed audio data to the previously used audio output device by the second processor (520); and
allocating a PCM buffer for bluetooth communication corresponding to the second storage area and storing PCM data corresponding to the second audio data in the PCM buffer for Bluetooth communication when the first external electronic device is a device connected to the electronic device through the bluetooth communication by the second processor (520).

## Patentansprüche

1. Elektronische Vorrichtung (101, 201), umfassend:
ein Ausgabemodul (255, 278);
ein Kommunikationsmodul (190, 290);
einen Speicher (130, 230), konfiguriert zum Speichern von Befehlen; und
mindestens einen Prozessor (120, 220),
wobei die Befehle konfiguriert sind, bei Ausführung durch den mindestens einen Prozessor die elektronische Vorrichtung zu veranlassen:
eine Anforderung zur Wiedergabe einer Tonquelle durch eine Ausführung einer Anwendung zu identifizieren;
einen aktiven Zustand einer Tonquellentrennungswiedergabefunktion basierend auf der Anforderung zur Wiedergabe der Tonquelle zu identifizieren;
basierend darauf, dass ein bestimmtes Audioausgabegerät für die Tonquelle in dem aktiven Zustand der Tonquellentrennungswiedergabefunktion die elektronische Vorrichtung ist, erste Audiodaten einschließlich Puls-Code-Modulations-(PCM)-Daten, die entsprechend der wiederzugebenden Tonquelle erhalten werden, in einem ersten Speicherbereich des Speichers zu speichern und die ersten Audiodaten über das Ausgabemodul auszugeben; und
basierend darauf, dass das bestimmtes Audioausgabegerät für die Tonquelle in dem aktiven Zustand der Tonquellentrennungswiedergabefunktion eine erste externe elektronische Vorrichtung ist, die in der Lage ist, drahtlos mit der elektronischen Vorrichtung zu kommunizieren, zweite Audiodaten einschließlich Puls-Code-Modulations-(PCM)-Daten, die entsprechend der wiederzugebenden Tonquelle erhalten werden, in einem zweiten Speicherbereich des Speichers zu speichern, die zweiten Audiodaten in Drahtloskommunikationsdaten umzuwandeln und die Drahtloskommunikationsdaten an die erste externe elektronische Vorrichtung zu übertragen;
**dadurch gekennzeichnet, dass** der mindestens eine Prozessor (220) einen ersten Prozessor (510) mit einer Zentraleinheit (Central Processing Unit) und einen zweiten Prozessor (520) mit einem Audio-Subsystem umfasst,
wobei die Befehle ferner konfiguriert sind, bei Ausführung durch den ersten Prozessor die elektronische Vorrichtung zu veranlassen, in dem aktiven Zustand der Tonquellentrennungswiedergabefunktion die entsprechend der wiederzugebenden Tonquelle erhaltenen ersten Audiodaten in dem ersten Speicherbereich des Speichers zu speichern und die entsprechend der wiederzugebenden Tonquelle erhaltenen zweiten Audiodaten in dem zweiten Speicherbereich des Speichers zu speichern, und in einem inaktiven Zustand der Tonquellentrennungswiedergabefunktion Audiodaten, die entsprechend der wiederzugebenden Tonquelle erhalten werden, in dem ersten Speicherbereich zu speichern,
wobei die Befehle ferner konfiguriert sind, bei Ausführung durch den zweiten Prozessor die elektronische Vorrichtung zu veranlassen, in dem aktiven Zustand der Tonquellentrennungswiedergabefunktion die in dem ersten Speicherbereich gespeicherten ersten Audiodaten zu verarbeiten und die verarbeiteten ersten Audiodaten über das Ausgabemodul auszugeben, die in dem zweiten Speicherbereich gespeicherten zweiten Audiodaten zu verarbeiten, um in die Drahtloskommunikationsdaten umgewandelt zu werden, und die umgewandelten Drahtloskommunikationsdaten über das Kommunikationsmodul an die erste externe elektronische Vorrichtung zu übertragen, und in dem inaktiven Zustand der Tonquellentrennungswiedergabefunktion die in dem ersten Speicherbereich gespeicherten Audiodaten zu verarbeiten und die verarbeiteten Audiodaten an das zuvor verwendete Audioausgabegerät auszugeben, und
wobei die Befehle ferner konfiguriert sind, bei Ausführung durch den zweiten Prozessor die elektronische Vorrichtung zu veranlassen, einen PCM-Puffer für Bluetooth-Kommunikation entsprechend dem zweiten Speicherbereich zuzuweisen und PCM-Daten, die den zweiten Audiodaten entsprechen, in dem PCM-Puffer für Bluetooth-Kommunikation zu speichern, wenn die erste externe elektronische Vorrichtung eine über die Bluetooth-Kommunikation mit der elektronischen Vorrichtung verbundene Vorrichtung ist.

2. Elektronische Vorrichtung nach Anspruch 1, wobei das Ausgabemodul (255, 278) ein Audioausgabemodul (255) oder ein Universal-Serial-Bus-(USB)-Ausgabemodul (278) umfasst.

3. Elektronische Vorrichtung nach Anspruch 1 oder 2,
wobei die Befehle ferner konfiguriert sind, bei Ausführung durch den mindestens einen Prozessor die elektronische Vorrichtung zu veranlassen, basierend auf dem aktiven Zustand der Tonquellentrennungswiedergabefunktion das bestimmte Audioausgabegerät als die elektronische Vorrichtung oder die erste externe elektronische Vorrichtung zu identifizieren.

4. Elektronische Vorrichtung nach einem der Ansprüche 1 bis 3,
wobei die Befehle ferner konfiguriert sind, bei Ausführung durch den mindestens einen Prozessor die elektronische Vorrichtung zu veranlassen, basierend auf dem inaktiven Zustand der Tonquellentrennungswiedergabefunktion das bestimmte Audioausgabegerät als ein zuvor verwendetes Audioausgabegerät zu identifizieren.

5. Elektronische Vorrichtung nach einem der Ansprüche 1 bis 4,
wobei die Befehle ferner konfiguriert sind, bei Ausführung durch den zweiten Prozessor die elektronische Vorrichtung zu veranlassen, beim Verarbeiten der ersten Audiodaten eine Mischverarbeitung (Mixing Processing) zum Umwandeln einer Frequenz und eines Bits der ersten Audiodaten und eine Abtastratenumwandlung (Sample Rate Converting, SRC) zum Umwandeln und erneuten Abtasten einer Abtastrate der ersten Audiodaten in eine dem Ausgabemodul entsprechende Abtastrate durchzuführen.

6. Elektronische Vorrichtung nach einem der Ansprüche 1 bis 5,
wobei die Befehle ferner konfiguriert sind, bei Ausführung durch den zweiten Prozessor die elektronische Vorrichtung zu veranlassen, beim Verarbeiten der zweiten Audiodaten eine Mischverarbeitung zum Umwandeln einer Frequenz und eines Bits der zweiten Audiodaten und eine Abtastratenumwandlung (SRC) zum Umwandeln und erneuten Abtasten einer Abtastrate der zweiten Audiodaten in eine der ersten externen elektronischen Vorrichtung entsprechende Abtastrate durchzuführen.

7. Elektronische Vorrichtung nach einem der Ansprüche 1 bis 6,
wobei die Befehle ferner konfiguriert sind, bei Ausführung durch den ersten Prozessor die elektronische Vorrichtung zu veranlassen, wenn sie konfiguriert ist, eine SRC-Verarbeitung an den zweiten Audiodaten durchzuführen, die SRC-Verarbeitung an den zweiten Audiodaten durchzuführen und die SRC-verarbeiteten zweiten Audiodaten in dem zweiten Speicherbereich des Speichers zu speichern.

8. Elektronische Vorrichtung nach einem der Ansprüche 1 bis 7,
wobei die Befehle ferner konfiguriert sind, bei Ausführung durch den ersten Prozessor die elektronische Vorrichtung zu veranlassen, zu identifizieren, ob SRC-Verarbeitung der zweiten Audiodaten erforderlich ist, und wenn die SRC-Verarbeitung der zweiten Audiodaten nicht erforderlich ist, die SRC-Verarbeitung der zweiten Audiodaten zu unterlassen.

9. Verfahren zum Ausgeben von Audiodaten in einer elektronischen Vorrichtung (101, 201), wobei das Verfahren umfasst:
Identifizieren (412) einer Anforderung zur Wiedergabe einer Tonquelle durch Ausführung einer Anwendung;
Identifizieren (414) eines aktiven Zustands einer Tonquellentrennungswiedergabefunktion basierend auf der Anforderung zur Wiedergabe der Tonquelle;
basierend darauf, dass ein bestimmtes Audioausgabegerät für die Tonquelle in dem aktiven Zustand der Tonquellentrennungswiedergabefunktion die elektronische Vorrichtung ist, Speichern (424) erster Audiodaten einschließlich Puls-Code-Modulations-(PCM)-Daten, die entsprechend der wiederzugebenden Tonquelle erhalten werden, in einem ersten Speicherbereich eines Speichers (130, 230) und Ausgeben (426) der ersten Audiodaten über ein Ausgabemodul (255, 278); und
basierend darauf, dass das bestimmte Audioausgabegerät für die Tonquelle in dem aktiven Zustand der Tonquellentrennungswiedergabefunktion eine erste externe elektronische Vorrichtung ist, die in der Lage ist, drahtlos mit der elektronischen Vorrichtung zu kommunizieren, Speichern (430) zweiter Audiodaten einschließlich PCM-Daten, die entsprechend der wiederzugebenden Tonquelle erhalten werden, in einem zweiten Speicherbereich des Speichers, Umwandeln (432) der zweiten Audiodaten in Drahtloskommunikationsdaten und Übertragen der Drahtloskommunikationsdaten an die erste externe elektronische Vorrichtung über ein Kommunikationsmodul (190, 290);
ferner umfassend:
in dem aktiven Zustand der Tonquellentrennungswiedergabefunktion, Speichern der erhaltenen ersten Audiodaten, die der wiederzugebenden Tonquelle entsprechen, in dem ersten Speicherbereich des Speichers und Speichern der erhaltenen zweiten Audiodaten, die der wiederzugebenden Tonquelle entsprechen, in dem zweiten Speicherbereich des Speichers durch einen ersten Prozessor (510);
in einem inaktiven Zustand der Tonquellentrennungswiedergabefunktion, Speichern erhaltener Audiodaten, die der wiederzugebenden Tonquelle entsprechen, in dem ersten Speicherbereich durch den ersten Prozessor (510);
in dem aktiven Zustand der Tonquellentrennungswiedergabefunktion, Steuern zum Verarbeiten der in dem ersten Speicherbereich gespeicherten ersten Audiodaten und Ausgeben der verarbeiteten ersten Audiodaten über das Ausgabemodul, Verarbeiten der in dem zweiten Speicherbereich gespeicherten zweiten Audiodaten, um in die Drahtloskommunikationsdaten umgewandelt zu werden, und Übertragen der umgewandelten Drahtloskommunikationsdaten an die erste externe elektronische Vorrichtung über das Kommunikationsmodul durch einen zweiten Prozessor (520);
in dem inaktiven Zustand der Tonquellentrennungswiedergabefunktion, Verarbeiten der in dem ersten Speicherbereich gespeicherten Audiodaten und Ausgeben der verarbeiteten Audiodaten an das zuvor verwendete Audioausgabegerät durch den zweiten Prozessor (520); und
Zuweisen eines PCM-Puffers für Bluetooth-Kommunikation entsprechend dem zweiten Speicherbereich und Speichern von den zweiten Audiodaten entsprechenden PCM-Daten in dem PCM-Puffer für Bluetooth-Kommunikation, wenn die erste externe elektronische Vorrichtung eine über die Bluetooth-Kommunikation mit der elektronischen Vorrichtung verbundene Vorrichtung ist, durch den zweiten Prozessor (520).

10. Verfahren nach Anspruch 9, wobei das Ausgabemodul ein Audioausgabemodul oder ein Universal-Serial-Bus-(USB)-Ausgabemodul umfasst.

11. Verfahren nach Anspruch 9 oder 10, ferner umfassend Identifizieren des bestimmten Audioausgabegeräts als die elektronische Vorrichtung oder die erste externe elektronische Vorrichtung basierend auf dem aktiven Zustand der Tonquellentrennungswiedergabefunktion.

12. Verfahren nach einem der Ansprüche 9 bis 11, ferner umfassend Identifizieren des bestimmten Audioausgabegeräts als ein zuvor verwendetes Audioausgabegerät basierend auf dem inaktiven Zustand der Tonquellentrennungswiedergabefunktion.

13. Nichtflüchtiges Speichermedium, das Befehle speichert, wobei die Befehle konfiguriert sind, bei Ausführung durch eine elektronische Vorrichtung die elektronische Vorrichtung zu veranlassen, mindestens einen Vorgang durchzuführen, wobei der mindestens eine Vorgang umfasst:
Identifizieren einer Anforderung zur Wiedergabe einer Tonquelle durch eine Ausführung einer Anwendung;
Identifizieren eines aktiven Zustands einer Tonquellentrennungswiedergabefunktion basierend auf der Anforderung zur Wiedergabe der Tonquelle;
basierend darauf, dass ein bestimmtes Audioausgabegerät für die Tonquelle in dem aktiven Zustand der Tonquellentrennungswiedergabefunktion die elektronische Vorrichtung ist, Speichern erster Audiodaten einschließlich Puls-Code-Modulations-(PCM)-Daten, die entsprechend der wiederzugebenden Tonquelle erhalten werden, in einem ersten Speicherbereich eines Speichers (130, 230) und Ausgeben der ersten Audiodaten über ein Ausgabemodul (255, 278); und
basierend darauf, dass das bestimmte Audioausgabegerät für die Tonquelle in dem aktiven Zustand der Tonquellentrennungswiedergabefunktion eine erste externe elektronische Vorrichtung ist, die in der Lage ist, drahtlos mit der elektronischen Vorrichtung zu kommunizieren, Speichern zweiter Audiodaten einschließlich PCM-Daten, die entsprechend der wiederzugebenden Tonquelle erhalten werden, in einem zweiten Speicherbereich des Speichers, Umwandeln der zweiten Audiodaten in Drahtloskommunikationsdaten und Übertragen der Drahtloskommunikationsdaten an die erste externe elektronische Vorrichtung über ein Kommunikationsmodul (190, 290);
ferner umfassend:
in dem aktiven Zustand der Tonquellentrennungswiedergabefunktion, Speichern der erhaltenen ersten Audiodaten, die der wiederzugebenden Tonquelle entsprechen, in dem ersten Speicherbereich des Speichers und Speichern der erhaltenen zweiten Audiodaten, die der wiederzugebenden Tonquelle entsprechen, in dem zweiten Speicherbereich des Speichers durch einen ersten Prozessor (510);
in einem inaktiven Zustand der Tonquellentrennungswiedergabefunktion, Speichern erhaltener Audiodaten, die der wiederzugebenden Tonquelle entsprechen, in dem ersten Speicherbereich durch den ersten Prozessor (510);
in dem aktiven Zustand der Tonquellentrennungswiedergabefunktion, Steuern zum Verarbeiten der in dem ersten Speicherbereich gespeicherten ersten Audiodaten und Ausgeben der verarbeiteten ersten Audiodaten über das Ausgabemodul, Verarbeiten der in dem zweiten Speicherbereich gespeicherten zweiten Audiodaten, um in die Drahtloskommunikationsdaten umgewandelt zu werden, und Übertragen der umgewandelten Drahtloskommunikationsdaten an die erste externe elektronische Vorrichtung über das Kommunikationsmodul durch einen zweiten Prozessor (520);
in dem inaktiven Zustand der Tonquellentrennungswiedergabefunktion, Verarbeiten der in dem ersten Speicherbereich gespeicherten Audiodaten und Ausgeben der verarbeiteten Audiodaten an das zuvor verwendete Audioausgabegerät durch den zweiten Prozessor (520); und
Zuweisen eines PCM-Puffers für Bluetooth-Kommunikation entsprechend dem zweiten Speicherbereich und Speichern von den zweiten Audiodaten entsprechenden PCM-Daten in dem PCM-Puffer für Bluetooth-Kommunikation, wenn die erste externe elektronische Vorrichtung eine über die Bluetooth-Kommunikation mit der elektronischen Vorrichtung verbundene Vorrichtung ist, durch den zweiten Prozessor (520).

## Revendications

1. Dispositif électronique (101, 201), comprenant :
un module de sortie (255, 278) ;
un module de communication (190, 290) ;
une mémoire (130, 230), configurée pour stocker des instructions ; et
au moins un processeur (120, 220),
dans lequel les instructions sont configurées pour, lorsqu'elles sont exécutées par l'au moins un processeur, amener le dispositif électronique à :
identifier une demande, donnée par une exécution d'une application, de lecture d'une source sonore ;
identifier un état actif d'une fonction de lecture par séparation de source sonore sur la base de la demande de lecture de la source sonore ;
sur la base de ce qu'un dispositif de sortie audio désigné pour la source sonore est le dispositif électronique dans l'état actif de la fonction de lecture par séparation de source sonore, stocker des premières données audio comprenant des données de modulation par impulsion codée (PCM) obtenues correspondant à la source sonore demandée à lire dans une première zone de stockage de la mémoire et diffuser les premières données audio à travers le module de sortie ; et
sur la base de ce que le dispositif de sortie audio désigné pour la source sonore est un premier dispositif électronique externe permettant une communication sans fil avec le dispositif électronique dans l'état actif de la fonction de lecture par séparation de source sonore, stocker des secondes données audio comprenant des données PCM obtenues correspondant à la source sonore demandée à lire dans une seconde zone de stockage de la mémoire, convertir les secondes données audio en données de communication sans fil et transmettre les données de communication sans fil vers le premier dispositif électronique externe ;
**caractérisé en ce que** l'au moins un processeur (220) comprend un premier processeur (510) comprenant une unité centrale de traitement et un second processeur (520) comprenant un sous-système audio,
dans lequel les instructions sont en outre configurées pour, lorsqu'elles sont exécutées par le premier processeur, amener le dispositif électronique à, dans l'état actif de la fonction de lecture par séparation de source sonore, stocker les premières données audio obtenues correspondant à la source sonore demandée à lire dans la première zone de stockage de la mémoire et stocker les secondes données audio obtenues correspondant à la source sonore demandée à lire dans la seconde zone de stockage de la mémoire, et dans un état inactif de la fonction de lecture par séparation de source sonore, stocker des données audio obtenues correspondant à la source sonore demandée à lire dans la première zone de stockage,
dans lequel les instructions sont en outre configurées pour, lorsqu'elles sont exécutées par le second processeur, amener le dispositif électronique à, dans l'état actif de la fonction de lecture par séparation de source sonore, traiter les premières données audio stockées dans la première zone de stockage et diffuser les premières données audio traitées à travers le module de sortie, traiter les secondes données audio stockées dans la seconde zone de stockage à convertir en données de communication sans fil, et transmettre les données de communication sans fil converties vers le premier dispositif électronique externe à travers le module de communication, et dans l'état inactif de la fonction de lecture par séparation de source sonore, traiter les données audio stockées dans la première zone de stockage et diffuser les données audio traitées vers le dispositif de sortie audio précédemment utilisé, et
dans lequel les instructions sont en outre configurées pour, lorsqu'elles sont exécutées par le second processeur, amener le dispositif électronique à attribuer un tampon PCM pour la communication Bluetooth correspondant à la seconde zone de stockage et stocker des données PCM correspondant aux secondes données audio dans le tampon PCM pour la communication Bluetooth lorsque le premier dispositif électronique externe est un dispositif connecté au dispositif électronique à travers la communication Bluetooth.

2. Dispositif électronique selon la revendication 1, dans lequel le module de sortie (255, 278) comprend un module de sortie audio (255) ou un module de sortie à bus universel en série, USB (278).

3. Dispositif électronique selon la revendication 1 ou 2,
dans lequel les instructions sont en outre configurées pour, lorsqu'elles sont exécutées par l'au moins un processeur, amener le dispositif électronique à identifier le dispositif de sortie audio désigné comme le dispositif électronique ou le premier dispositif électronique externe sur la base de l'état actif de la fonction de lecture par séparation de source sonore.

4. Dispositif électronique selon l'une quelconque des revendications 1 à 3,
dans lequel les instructions sont en outre configurées pour, lorsqu'elles sont exécutées par l'au moins un processeur, amener le dispositif électronique à identifier le dispositif de sortie audio désigné comme un dispositif de sortie audio précédemment utilisé sur la base de l'état inactif de la fonction de lecture par séparation de source sonore.

5. Dispositif électronique selon l'une quelconque des revendications 1 à 4,
dans lequel les instructions sont en outre configurées pour, lorsqu'elles sont exécutées par le second processeur, amener le dispositif électronique à effectuer un traitement de mixage pour convertir une fréquence et un bit des premières données audio et une conversion de fréquence d'échantillonnage, SRC, pour convertir et ré-échantillonner une fréquence d'échantillonnage des premières données audio en une fréquence d'échantillonnage correspondant au module de sortie lors du traitement des premières données audio.

6. Dispositif électronique selon l'une quelconque des revendications 1 à 5,
dans lequel les instructions sont en outre configurées pour, lorsqu'elles sont exécutées par le second processeur, amener le dispositif électronique à effectuer un traitement de mixage pour convertir une fréquence et un bit des secondes données audio et une conversion de fréquence d'échantillonnage, SRC, pour convertir et ré-échantillonner une fréquence d'échantillonnage des seconde données audio en une fréquence d'échantillonnage correspondant au premier dispositif électronique externe lors du traitement des secondes données audio.

7. Dispositif électronique selon l'une quelconque des revendications 1 à 6,
dans lequel les instructions sont en outre configurées pour, lorsqu'elles sont exécutées par le premier processeur, amener le dispositif électronique à, lorsqu'il est configuré pour effectuer un traitement SRC sur les secondes données audio, effectuer un traitement SRC sur les secondes données audio et stocker les secondes données audio soumises à un traitement SRC dans la seconde zone de stockage de la mémoire.

8. Dispositif électronique selon l'une quelconque des revendications 1 à 7,
dans lequel les instructions sont en outre configurées pour, lorsqu'elles sont exécutées par le premier processeur, amener le dispositif électronique à identifier si un traitement SRC sur les secondes données audio est demandé et, lorsque le traitement SRC sur les secondes données audio n'est pas demandé, s'abstenir d'effectuer le traitement SRC sur les secondes données audio.

9. Procédé pour diffuser des données audio dans un dispositif électronique (101, 201), le procédé comprenant :
identifier (412) une demande, donnée par une exécution d'une application, de lecture d'une source sonore ;
identifier (414) un état actif d'une fonction de lecture par séparation de source sonore sur la base de la demande de lecture de la source sonore ;
sur la base de ce qu'un dispositif de sortie audio désigné pour la source sonore est le dispositif électronique dans l'état actif de la fonction de lecture par séparation de source sonore, stocker (424) des premières données audio comprenant des données de modulation par impulsion codée (PCM) obtenues correspondant à la source sonore demandée à lire dans une première zone de stockage d'une mémoire (130, 230) et diffuser (426) les premières données audio à travers un module de sortie (255, 278) ; et
sur la base de ce que le dispositif de sortie audio désigné pour la source sonore est un premier dispositif électronique externe permettant une communication sans fil avec le dispositif électronique dans l'état actif de la fonction de lecture par séparation de source sonore, stocker (430) des secondes données audio comprenant des données PCM obtenues correspondant à la source sonore demandée à lire dans une seconde zone de stockage de la mémoire, convertir (432) les secondes données audio en données de communication sans fil et transmettre les données de communication sans fil vers le premier dispositif électronique externe à travers un module de communication (190, 290) ;
comprenant en outre :
dans l'état actif de la fonction de lecture par séparation de source sonore, stocker les premières données audio obtenues correspondant à la source sonore demandée à lire dans la première zone de stockage de la mémoire et stocker les secondes données audio obtenues correspondant à la source sonore demandée à lire dans la seconde zone de stockage de la mémoire par un premier processeur (510) ;
dans un état inactif de la fonction de lecture par séparation de source sonore, stocker des données audio obtenues correspondant à la source sonore demandée à lire dans la première zone de stockage par le premier processeur (510) ;
dans l'état actif de la fonction de lecture par séparation de source sonore, commander pour traiter les premières données audio stockées dans la première zone de stockage et diffuser les premières données audio traitées à travers le module de sortie, traiter les secondes données audio stockées dans la seconde zone de stockage à convertir en données de communication sans fil, et transmettre les données de communication sans fil converties vers le premier dispositif électronique externe à travers le module de communication par un second processeur (520) ;
dans l'état inactif de la fonction de lecture par séparation de source sonore, traiter les données audio stockées dans la première zone de stockage et diffuser les données audio traitées vers le dispositif de sortie audio précédemment utilisé par le second processeur (520) ; et
attribuer un tampon PCM pour la communication Bluetooth correspondant à la seconde zone de stockage et stocker des données PCM correspondant aux secondes données audio dans le tampon PCM pour la communication Bluetooth lorsque le premier dispositif électronique externe est un dispositif connecté au dispositif électronique à travers la communication Bluetooth par le second processeur (520).

10. Procédé selon la revendication 9, dans lequel le module de sortie comprend un module de sortie audio ou un module de sortie à bus universel en série, USB.

11. Procédé selon la revendication 9 ou 10, comprenant en outre identifier le dispositif de sortie audio désigné comme le dispositif électronique ou le premier dispositif électronique externe sur la base de l'état actif de la fonction de lecture par séparation de source sonore.

12. Procédé selon l'une quelconque des revendications 9 à 11, comprenant en outre identifier le dispositif de sortie audio désigné comme un dispositif de sortie audio précédemment utilisé sur la base de l'état inactif de la fonction de lecture par séparation de source sonore.

13. Support de stockage non transitoire stockant des instructions, dans lequel les instructions sont configurées pour, lorsqu'elles sont exécutées par un dispositif électronique, amener le dispositif électronique à effectuer au moins une opération, l'au moins une opération comprenant :
identifier une demande, donnée par une exécution d'une application, de lecture d'une source sonore ;
identifier un état actif d'une fonction de lecture par séparation de source sonore sur la base de la demande de lecture de la source sonore ;
sur la base de ce qu'un dispositif de sortie audio désigné pour la source sonore est le dispositif électronique dans l'état actif de la fonction de lecture par séparation de source sonore, stocker des premières données audio comprenant des données de modulation par impulsion codée (PCM) obtenues correspondant à la source sonore demandée à lire dans une première zone de stockage d'une mémoire (130, 230) et diffuser les premières données audio à travers un module de sortie (255, 278) ; et
sur la base de ce que le dispositif de sortie audio désigné pour la source sonore est un premier dispositif électronique externe permettant une communication sans fil avec le dispositif électronique dans l'état actif de la fonction de lecture par séparation de source sonore, stocker des secondes données audio comprenant des données PCM obtenues correspondant à la source sonore demandée à lire dans une seconde zone de stockage de la mémoire, convertir les secondes données audio en données de communication sans fil et transmettre les données de communication sans fil vers le premier dispositif électronique externe à travers un module de communication (190, 290) ;
comprenant en outre :
dans l'état actif de la fonction de lecture par séparation de source sonore, stocker les premières données audio obtenues correspondant à la source sonore demandée à lire dans la première zone de stockage de la mémoire et stocker les secondes données audio obtenues correspondant à la source sonore demandée à lire dans la seconde zone de stockage de la mémoire par un premier processeur (510) ;
dans un état inactif de la fonction de lecture par séparation de source sonore, stocker des données audio obtenues correspondant à la source sonore demandée à lire dans la première zone de stockage par le premier processeur (510) ;
dans l'état actif de la fonction de lecture par séparation de source sonore, commander pour traiter les premières données audio stockées dans la première zone de stockage et diffuser les premières données audio traitées à travers le module de sortie, traiter les secondes données audio stockées dans la seconde zone de stockage à convertir en données de communication sans fil, et transmettre les données de communication sans fil converties vers le premier dispositif électronique externe à travers le module de communication par un second processeur (520) ;
dans l'état inactif de la fonction de lecture par séparation de source sonore, traiter les données audio stockées dans la première zone de stockage et diffuser les données audio traitées vers le dispositif de sortie audio précédemment utilisé par le second processeur (520) ; et
attribuer un tampon PCM pour la communication Bluetooth correspondant à la seconde zone de stockage et stocker des données PCM correspondant aux secondes données audio dans le tampon PCM pour la communication Bluetooth lorsque le premier dispositif électronique externe est un dispositif connecté au dispositif électronique à travers la communication Bluetooth par le second processeur (520).
